# EUROPEAN PATENT SPECIFICATION

(11) **EP 3 641 901 B1**
(45) Date of publication and mention of the grant of the patent: **16.07.2025**
(21) Application number: 18819778.4
(22) Date of filing: 20.06.2018
(51) Int. Cl.: B01D 61/02, B01D 61/08, B01D 61/14, B01D 61/58, C12C 7/28, C12C 11/11, C12G 3/08, C12H 1/02, C12H 1/04, C12H 1/06, C12H 1/14, C12H 1/22, C12H 6/00, C12H 1/052, C12H 1/07, C12H 1/065

(54) **METHOD FOR THE PRODUCTION OF A PHYSICALLY STABLE HIGH GRAVITY BEER**
VERFAHREN ZUR HERSTELLUNG EINES PHYSIKALISCH STABILEN BIERS MIT HOHER SCHWERKRAFT
PROCÉDÉ POUR LA PRODUCTION D'UNE BIÈRE À HAUTE DENSITÉ PHYSIQUEMENT STABLE

(30) Priority: 20.06.2017 US 201762522562 P; 07.03.2018 US 201862639883 P
(43) Date of publication of application: 29.04.2020
(73) Proprietor: Alfa Laval Copenhagen A/S, 2860 Søborg (DK)
(72) Inventor: MCGOVERN, Ronan, K., Somerville MA 02143 (US); WEINER, Adam, M., Woburn, MA 01801 (US); HUNT, Andrew, Somerville MA 02143 (US); THOMPSON, Paul, Michael, Somerville MA 02143 (US)
(74) Representative: Alfa Laval Attorneys
(86) International application number: PCT/US2018/038517
(87) International publication number: WO 2018/237015

(56) References cited:
- EP-A1- 0 089 893
- EP-A1- 2 595 723
- EP-A2- 0 180 442
- WO-A1-97/43400
- WO-A1-97/43400
- US-A- 4 612 196
- US-A- 4 999 209
- US-A- 5 304 384
- US-A1- 2008 044 530
- US-A1- 2008 044 530
- US-A1- 2015 307 824
- US-A1- 2016 230 133
- US-A1- 2016 230 133

## Description

### Technical Field

The present invention relates to a method of producing a physically stable alcoholic beverage having a turbidity of less than 2 EBC units, the alcoholic beverage being beer.

### Background Art

With respect to all beers - whether derived from high gravity beer or not - one important aspect of quality for beer drinkers is haze. In certain styles, such as hefeweizens and many craft beer styles, haze is acceptable or even desirable for the consumer. In other beer styles, such as a German Helles beer (meaning bright beer), the opposite is true and consumers find the presence of haze undesirable. Indeed, in the majority of beers consumed today, clarity is seen as a marker of quality in finished beer. A beer is considered to be haze-free under a turbidity of 2 EBC (European Brewers Convention units). EBC units are discussed in the context of other measurement standards at http://www.chemtronic-gmbh.de/index.php/techno-corner/79-ctr-english/98-turbidity-standards, as available on June 19, 2017, which is attached hereto and incorporated herein by reference. Typically, therefore, it is uneconomical for a brewery to remove haze-causing constituents below the haze-free threshold of about 2 EBC. To achieve this clarity in their beers, brewers often allow haze to settle from their beers over time, or filter their beers using microfiltration or diatomaceous earth. Certain brewers may also add fining agents such as silica hydrogel, xero gel, bentonite, isinglass, PVPP, gelatin, copper, and/or Irish moss, amongst others. These fining agents precipitate out haze-causing compounds and produce a clear beer. However, if used in excess, these fining agents may strip out compounds giving beer its characteristic flavor.

In producing beer, it is common to first brew a beer that is of elevated alcohol content relative to the final beer product. This beer-known as high gravity beer- is typically is 6% -15% alcohol by volume (ABV). Thereafter the high gravity beer is typically de-brewed, through the addition of adjustment water, and introduction of carbonation to create a finished beer with alcohol by volume typically in the range of about 4% to 6% ABV. One benefit to brewers of this high gravity approach is that the size of the brew kettle needed for brewing a given amount of final beer product is smaller than when a beer is brewed directly to the final level of alcohol. For example, one hectoliter of high gravity beer, after de-brewing with adjustment water, might yield two hectoliters of final product. A second benefit of this high gravity method of brewing is transport efficiency. For example, high gravity beer may be produced in one location and then transported to another location, preferably closer to the consumer, where the high gravity beer is de-brewed with adjustment water and packaged for distribution. US2016/0230133A1 and EP0180442A2 show examples of beer concentration methods by reverse osmosis or by cooling.

On the other hand, one drawback of the high gravity method is that, the higher the alcohol concentration one tries to achieve during fermentation, the higher the stress upon the yeast, and the greater the impact upon flavor, and upon other characteristics important to the consumer, such as head retention. A less common method of producing a high gravity beer-which can circumvent issues of flavor faced in fermentation at high ABV-involves the use of membrane filtration to remove water from a lower alcohol beer to create a high gravity beer. Such a method is disclosed in PCT publication WO 2016/081399 A1. For example, one might take a beer at 6% ABV, adjust its water content, using reverse osmosis, to bring its concentration to 20% ABV. One might employ this approach for reasons of transport efficiency or for storage efficiency. In essence, the method allows for the production of a high gravity beer without needing to employ yeasts that can ferment to high alcohol levels but tend to impact flavor.

Methods for the control of haze in beers and high gravity beers produced via fermentation or high gravity fermentation are well known in the art. Often, beers are centrifuged or filtered via microfiltration (e.g., diatomaceous earth filters, cross-flow or dead-end membrane filters). Such processes, often practiced in conjunction with the prior addition of fining agents such as PVPP, allow for the removal of haze forming compounds such as proteins and polyphenol complexes. A reduced content of haze forming compounds in the beer delays the onset of haze as the beer ages over time. For example, a typical process might involve the addition of between 5 and 200 grams of fining agents per hectoliter of beer, subsequent centrifuging of the beer, followed by membrane filtration at between -2 °C and 4 °C to reduce the solubility of haze forming compounds, causing their precipitation and enabling their removal through filtration.

While the stabilization of conventionally brewed beers and high gravity beers is well understood, an understanding of conditions leading to the presence or absence of haze in high gravity beers (and resultant finished products) from processes involving water removal through membrane filtration is not present.

### Summary of the Invention

The present invention relates to a method of producing a physically stable alcoholic beverage having a turbidity of less than 2 EBC units, the beverage being beer and the method being defined in the appended claims.

The production of a high gravity beer through a process involving the removal of water from a beer via reverse osmosis can result in the formation of haze over time in the high gravity beer, and in a de-brewed final product that is derived therefrom. The presence of haze in a final beer product can be undesirable in filtered styles of lagers and ales that are crafted with brightness or brilliance in mind. In such styles of beer, the clarity of a lager is a signature of quality. The present invention address these circumstances.

In accordance with the invention, a method of producing a physically stable alcoholic beverage, having a turbidity of less than 2 EBC units, which is beer, the method comprising: receiving retentate from which water has been removed by reverse osmosis from a reverse osmosis filter system having an initial alcoholic precursor to the alcoholic beverage in a feed stream, wherein a concentration of alcohol in the retentate has reached between 10% and 40% by volume by the reverse osmosis; cooling the retentate to a temperature between about 2 degrees below a freezing point of the retentate and a freezing point of the initial alcoholic precursor to the alcoholic beverage in the feed stream to produce a cooled retentate; and subjecting the cooled retentate to a clarification process configured to remove particles having a size of 0.4 microns and larger to produce a clarified retentate, the clarification process including (a) centrifuging, (b) filtration using a filter, and/or (c) forming a supernate and a precipitate and then decanting the supernate.

In an embodiment, the method may further include debrewing the clarified retentate after subjecting the retentate to the clarification process. This de-brewing may occur at the same or at a different location to the clarification. The retentate may be cooled between about 10 minutes and about 60 minutes, between about 10 seconds and about 24 hours, for up to 48 hours, or for up to 1 week before the clarification process. The alcoholic beverage is beer. The cooling process may include cooling the retentate to a temperature of between about 2 degrees below the freezing point of the retentate (super-cooling) and about -2.5° C, or about -5° C. The method may further include adding a fining agent, such as polyvinylpolypyrrolidone, to the retentate before the clarification process. The method may further include debrewing the retentate by adding adjustment water after cooling the retentate and before subjecting the retentate to the clarification process.

In an embodiment a method of producing a physically stable beer having a turbidity of less than 2 EBC units, the beer having been subjected to filtration and separation processes includes extracting haze-causing constituents from a feed stream of the alcoholic beverage to produce a concentration of the haze-causing constituents of less than 80% of a first threshold that is sufficient to remove the presence of haze, receiving, from a reverse osmosis filter system having the alcoholic beverage in a feed stream, retentate from which water has been removed, wherein according to the invention the concentration of alcohol in the retentate has reached 10% to 40% by volume, preferably 15% to 25% by volume, and debrewing the retentate. Optionally, the extraction of haze-causing constituents may occur (or also occur) from the retentate from the reverse osmosis unit. The haze-causing constituents may be extracted from the feed stream by adding fining agents, conditioning at a cold temperature (such as described herein), decanting, microfiltration, ultrafiltration and/or centrifuging.

In a further related embodiment, the concentration of the haze-causing constituents is less than 50% or even less than 20% of the first threshold. The method further includes subjecting the retentate to a clarification process configured to remove particles having a size of 0.4 microns and larger before debrewing. The clarification process includes centrifuging, filtration using a filter, and/or forming a supernate and a precipitate and then decanting the supernate. The method further includes cooling the retentate, before subjecting the retentate to the clarification process, to a temperature between about 2 degrees below a freezing point of the retentate and a freezing point of the feed stream of the alcoholic beverage. The alcoholic beverage is beer, and the method may further include cooling the retentate, before subjecting the retentate to the clarification process, to a temperature between about 2 degrees below the freezing point of the retentate to about -2.5° C or -5.0° C. The cooling may include cooling the retentate between about 10 minutes and about 60 minutes, between about 10 seconds and about 24 hours, for up to 48 hours, or for up to a week before subjecting the retentate to the clarification process. The method may further include adding a fining agent, such as polyvinylpolypyrrolidone, to the retentate before the clarification process. The method may further include filtering the alcoholic beverage in the reverse osmosis filter system, wherein at least one membrane in the reverse osmosis filter system is substantially impermeable to ethanol but substantially permeable to water. The method may further include operating at least one membrane of the reverse osmosis filter system at a pressure of at least 1300 psi, at least 1500 psi, or at least 1800 psi. Generally, in this application 1 psi (pound-force per square inch) equals to 6,895 pascals (N/m²). The method may further include operating the reverse osmosis filtration system to utilize at least a portion of a pressure of the retentate to drive the clarification process of the retentate. The filtration may include a filter, which may be a diatomaceous earth filter, a polymeric membrane filter and/or a ceramic filter.

A debrewed beverage made according to the method recited above may have an ABV of between 3% and 8%, and total haze of between 0.5 and 5 NTU using EBC method 9.41 or between 0.25 and 8 NTU using EBC method 9.41. Another embodiment includes a clarified retentate made according to the method recited above.

A system, which is outside the subject-matter of the claims, for reducing haze by creating a physically stable alcoholic beverage that has been obtained via the filtration and separation processes may include a reverse osmosis filter system having a feed stream that receives an initial alcoholic precursor to the alcoholic beverage, and providing a retentate stream from which water has been removed, wherein the reverse osmosis filter system is configured to provide a concentration of alcohol in the retentate of between about 10% and 40% by volume, preferably between about 15% and 25% by volume, a clarification system having an input and an output, the input coupled to the retentate stream, the clarification system configured to remove particles having a size of about 0.4 microns and larger, or 0.4 to 0.8 microns to produce a clarified retentate. The clarification system includes a filter, a centrifuge, and/or a decanter.

The system may further include a heat transfer section, disposed between the reverse osmosis system and the clarification system, or within the reverse osmosis system (e.g., between stages or passes), configured to cool the retentate before clarification to a temperature between about 2 degrees below a freezing point of the retentate and a freezing point of the initial alcoholic precursor to the alcoholic beverage in the feed stream. The system may further include a debrewer having an input configured to receive the clarified retentate derived from the clarification system output, the debrewer having an output to provide the processed alcoholic beverage. The heat transfer section may be configured to cool the retentate between about 10 minutes and about 60 minutes, between about 10 seconds and about 24 hours, for up to 48 hours, or for up to one week before the clarification. The system may be further configured to implement any of the methods described above.

### Brief Description of the Drawings

The foregoing features of embodiments will be more readily understood by reference to the following detailed description, taken with reference to the accompanying drawings, in which:
Fig. 1 is a plot of turbidity (haze) measured in EBC units as a function ABV percentage in a retentate resulting from reverse osmosis filtration of beer to produce a high gravity beer.
Fig. 2 is a flow chart illustrating the path of the original beer through a reverse osmosis unit and further through a microfilter to produce a clarified retentate that is filtered in accordance with an embodiment of the present invention.
Fig. 3 is a flow chart illustrating haze removal using fining agents and a centrifuge to strip out haze-causing constituents, in accordance with another embodiment of the present invention, wherein the haze removal might be done, in some embodiments, before or after the reverse osmosis step.

### Detailed Description of Specific Embodiments

Definitions. As used in this description and the accompanying claims, the following terms shall have the meanings indicated, unless the context otherwise requires:
"Ultra-high gravity" wine or beer describes a retentate, of a reverse osmosis water removal process, applied to a wine or beer feed, that is higher in ethanol content than the feed to the process.
"Haze" in a beverage is the presence of visually observable particles in the beverage characterized by a turbidity of at least 2 EBC units. "EBC" stands for European Brewers Convention and is the primary unit used to measure beverage haze.
"Haze-causing constituents" are large polypeptides and polyphenols which interact to form hydrogen bonds, producing large particles characterizing haze.
"Permanent haze" occurs when haze-causing constituents interact for long periods of time and form permanent, covalent bonds rendering the haze insoluble.
A beverage is "haze-free" if the turbidity is less than 2 EBC.
"Debrewing" is the process of adding water to a beverage with a high alcohol by volume percentage, bringing that beverage to a commercially standard alcohol percentage.
"Tannins" are a subcategory of polyphenols that originate from plant tissue and are present in many alcoholic beverages. Tannins bind to and precipitate proteins and polypeptides. These are the primary family of polyphenols responsible for the formation of haze, while other polyphenols also contribute to the formation of haze.
"Adjustment water" is water employed to bring high gravity beer to the alcohol level of the finished beer. The water may be demineralized, purified using reverse osmosis or other technologies, deaerated and/or carbonated. Preferably, if the beer is to be packaged and distributed for consumption, the adjustment water should be microbe free, low in total dissolved solids (below 100 ppm) and low in oxygen (below 50 ppm, or even 10 ppm). If de-brewing is to occur at a bar (wherein, for example, high gravity beer may be provided in draft form), or at home (wherein, for example, high gravity beer may be provided in capsule form), it may be preferable to have water with minimal flavor, microbes or dissolved solids, but may be less important to have low oxygen content.
"NTU" is nephelometric turbidity units.
As used herein, "threshold" or "first threshold" refers to the EBC value for turbidity that brewers typically achieve using a combination of fining agents, centrifuging decanting, and/or filtration for beers that are not subjected to processing with reverse osmosis.

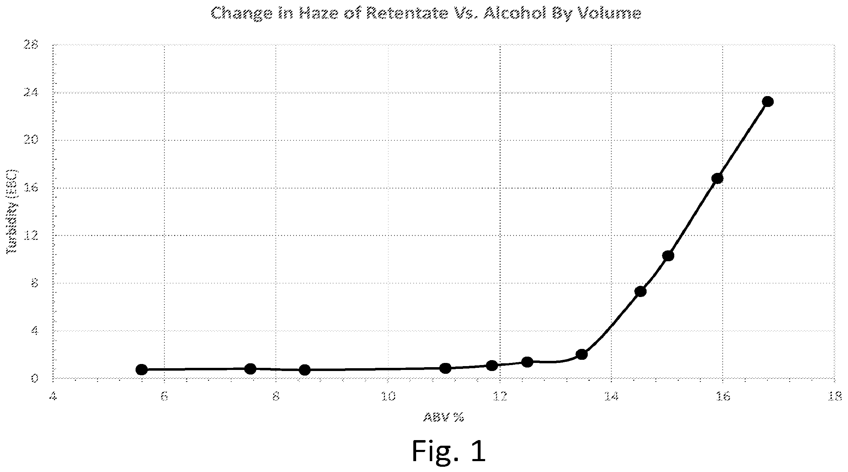

Fig. 1 is a plot of the change in turbidity (increase in haze) measured in EBC units as a function of ABV percentage in a retentate resulting from reverse osmosis filtration of beer to produce a high gravity beer. In this example, there was employed a reverse osmosis process, such as that depicted in PCT publication WO 2016/081399 Al, with membranes that are substantially impermeable to ethanol but substantially permeable to water.

We have found, somewhat surprisingly, that haze appears in beer from which water has been removed by reverse osmosis, using the foregoing process, and appears, for example, when the concentration of alcohol in the retentate has reached 10 % to about 40% ABV or higher, as shown in Fig. 1.

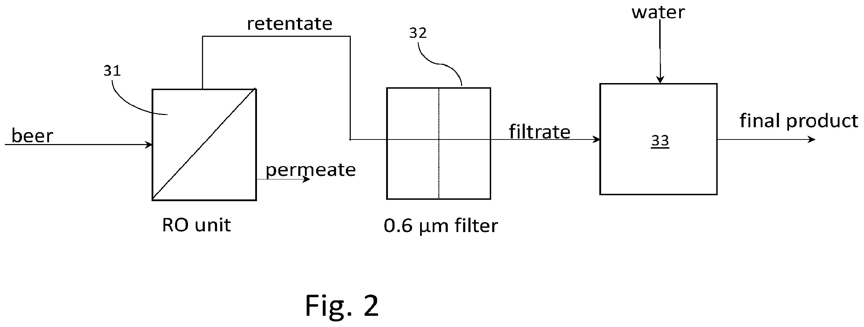

Fig. 2 is a flow chart illustrating the path of the original beer through a reverse osmosis unit and further through a clarification system (e.g., a microfilter) to produce a clarified retentate in accordance with an embodiment of the present invention. In Fig. 2, there is employed a reverse osmosis system 31, which is implemented in accordance with the teachings of published PCT application WO 2016/081399 Al. The retentate recovered from the reverse osmosis system 31 is high gravity beer, as described above. Thereafter, the high gravity beer retentate is subject to haze clarification through a clarification system 32 configured to remove particles having a size of about 0.6 microns and larger, such as a centrifuge, a filtration system having a filter, and/or a decanter that is configured to decant a supernate that is formed from the retentate. The clarified output of the clarification system 32 can then be shipped or otherwise handled as necessary. At some point prior to use, the high gravity beer clarified retentate is subjected to debrewing by debrewer 33, in which the high gravity beer is converted to the final product by the addition of adjustment water, which may also include carbon dioxide. A high gravity beer produced in this fashion can be transported more efficiently than the beverage in the feed stream, because it contains less water per unit volume. The high gravity beer may have improved microbial stability over the beverage in the feed stream, because the alcohol concentration by volume is higher.

Of note for the clarification of the high gravity beer is the size of the particles that the clarification system removes. For example, when the clarification system includes a filter, different types of filters may be employed, such as polymeric membranes, ceramic membranes, diatomaceous filters or filter presses, and these filters may be operated in cross-flow or dead-end modes. The size of particles that the clarification system removes are in the range of visible light, i.e., 0.4 microns, and larger. Preferably, to avoid the removal of flavor critical molecules and to achieve improved flows, the size of the particles that the clarification system removes may be in the range of 0.5 microns and larger. An illustration of this system and process can be found in Fig. 2.

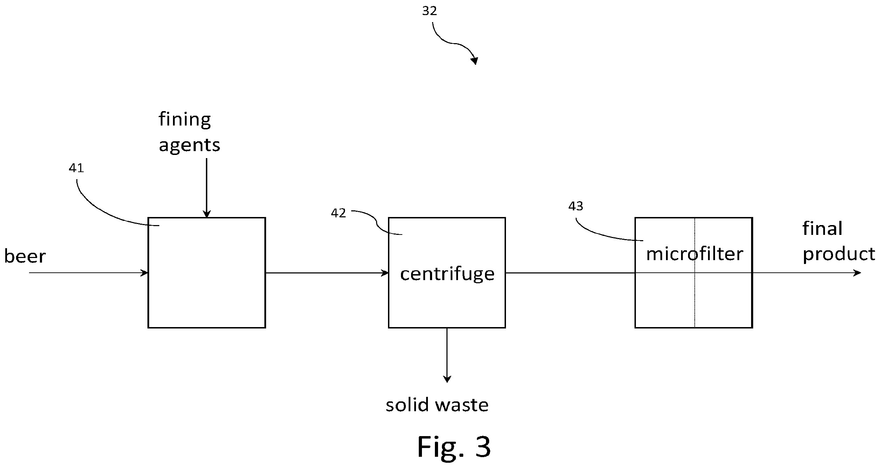

Fig. 3 is a flow chart illustrating haze removal using a clarification system 32 (e.g., fining agents 41, a centrifuge 42 to strip out haze-causing constituents, and a microfilter 43), in accordance with another embodiment of the present invention, wherein the haze removal is performed, before the reverse osmosis step. Typically, it is common to reduce turbidity in clear beers until it has reached a threshold in the general vicinity of 2 EBC units and haze is acceptably removed. However, in accordance with embodiments of the present invention, the turbidity of the beer being subjected to reverse osmosis processing is reduced by a further amount below the threshold, for example reduced to 80% or 60% of the threshold. With preclarification and/or the extraction of haze-causing constituents before reverse osmosis processing, the tendency to form haze after reverse osmosis processing to produce high gravity beer and after debrewing of the high gravity beer is reduced. The clarification, in accordance with this embodiment, may be achieved by optionally blending fining agents 41 followed by processing in a centrifuge 42 and/or in a microfilter 43. Alternatively, or in addition, the clarification may form a supernate and a precipitate, and the supernate may then be separated from the precipitate giving a clarified retentate, e.g., a clarified ultra-high gravity beer.

Also as shown generally in Fig. 3, haze forming compounds may be removed from the fermented wort prior to or after reverse osmosis filtration, through the use of fining agents, such as silica hydrogel, xero gel, PVPP (polyvinylpolypyrrolidone), isinglass, Irish moss, gelatin, copper and bentonite as well as by mechanical methods such as centrifugation. Agents that are negatively charged are commonly added to precipitate out positively charged, haze-forming proteins while other fining agents are used to remove polyphenols from the beer. More specifically, PVPP may be added to the beer as an absorbent after the precursor beverage is subjected to reverse osmosis. One major benefit of PVPP is that it is not a beer additive and is completely removed out of the final product. This polymer is water and beer insoluble and has a high affinity for polyphenols. In accordance with another embodiment, PVPP polymers are added after or before reverse osmosis, to absorb polyphenols and separate haze causing molecules (polyphenols) out of solution. The PVPP polyphenol complex is then extracted with the use of a centrifuge 42 and/or a microfilter 43. The PVPP is then regenerated by rinsing with caustic cleaner. PVPP may also be used in a one-pot system, where the beer flows through a microfilter, followed by PVPP addition and then through a final filter to separate the PVPP from the clarified beer. The PVPP is then regenerated by flowing or reverse flowing a caustic solution through the second filter.

There are multiple ways to ensure a physically stable final product. One simple way is to clarify the final product after de-brewing at a temperature of between about -2 and 4 °C, which may be done in combination with the addition of fining agents, filtration, decanting, and/or centrifugation. For example, beer or wine may be fermented and subsequently subjected to reverse osmosis at high pressures with membranes that are substantially impermeable to water to create an ultra-high gravity wine or beer. This wine or beer may be transported to a second location, where it is de-brewed and rendered physically stable through a combination of fining agent addition, centrifugation and/or filtration, such as microfiltration and/or ultrafiltration.

Another approach is to stabilize the ultra-high gravity beer via a combination of fining agent addition, decanting, centrifuging and/or filtration, such as microfiltration and/or ultrafiltration. Advantageously, since the freezing point of the ultra-high gravity beer is depressed or lowered as a result of the high concentration of ethanol, the ultra-high gravity beer may be stabilized at very low temperatures (e.g., about -25 to - 2.5 °C) (called the UltraChill technique herein), reducing the solubility of haze forming compounds, and enhancing the precipitation of haze forming compounds, which may then be removed. For example, beer or wine may be fermented and subsequently subjected to reverse osmosis at high pressures with membranes that are substantially impermeable to water to create an ultra-high gravity (uHG) wine or beer. This uHG beer or wine may then be stored at very low temperatures in a climate-controlled tank for storage at temperatures near freezing. The aged retentate may be conditioned at these temperatures to encourage molecular interactions causing haze forming complexes of proteins and polyphenols. The conditioning may be performed for a period of time ranging from 10 seconds up to four weeks, preferably from about 10 minutes to about 60 minutes, after which haze may be removed via clarification, potentially also at very low temperatures. This process also may be expedited with the use of fining agents (such as Polyclar 10 or Daraclar 920) in the range of 5 to 200 grams per hectoliter. These haze forming complexes then may be separated through centrifugation or filtration, resulting in a haze free product. The potential benefit of this approach is to create a physically stable uHG beer or wine that may be shipped and then de-brewed (potentially at the point of consumption), without concerns around the formation of haze in the final product.

Features of embodiments of the present invention using this UltraChill technique are a) that water is removed from a beer to create an ultra-high gravity beer (uHG beer), b) that the uHG beer (uHGB) is chilled to a temperature that is within two to three degrees of its freezing point for a period between one second and one hour, more preferably between 10 minutes and 40 minutes, to form a supernate and a precipitate, and c) that the supernate is separated from the precipitate giving a clarified ultra-high gravity beer. The water removal may be achieved via a reverse osmosis process with membranes that are substantially impermeable to ethanol. Such a process may be batch or continuous and may involve multiple stages and/or multiple passes. One possible embodiment is described in PCT publication WO 2016/081399. The chilling may be conducted in a batch process or continuously. For example, the ultra-high gravity beer may be transferred to a jacketed brite tank, in which it is chilled. Alternately, the ultra-high gravity beer may be chilled via an inline heat exchanger. The chilled ultra-high gravity beer may be allowed to settle in a brite tank, and the supernate may be drawn off from the top of the tank. Alternately, the precipitate may be drawn off from the bottom of the tank. Generally, to minimize product losses, it is advantageous to subject the precipitate (and optionally the supernate) to a centrifuging processes in order to recover further beer. Centrifuging the entire chilled ultra-high gravity beer is also a good approach for generating a clarified product while minimizing losses. It is also important that each step be conducted anaerobically to avoid oxidation of the product. To obtain the best flavor profile, it may be advantageous to blend a portion of the precipitate with the supernate. This will increase product haze but may offer sensory benefits. Further, it may be beneficial to subject the supernate to ultra-filtration or filtration with diatomaceous earth in order to further reduce haze.

### Examples

Water was removed from a lager to create an ultra-high gravity lager of 18-22% ABV, by employing a reverse osmosis process with membranes that were substantially impermeable to ethanol. A portion of the original lager was set aside as a control (the "control").

A portion of the ultra-high gravity lager was de-brewed, using de-aerated water, to roughly the same gravity as the control (the "ultra-high gravity trial" or "uHG trial").

Another portion of the ultra-high gravity lager was chilled to a temperature of -18 deg C (very close to freezing point) and maintained at that temperature for 30 minutes. Rapid precipitation was observed as the temperature approached the freezing point, and the high gravity lager formed a supernate (low in haze) and a precipitate (high in haze). The supernate was decanted and de-brewed, using de-aerated water, to roughly the same gravity as the control (the "clarified ultra-high gravity trial" or "C-uHG trial").

Measurements of permanent and chill haze were taken on the control, ultra-High Gravity (uHG) Trial and the Clarified High Gravity (C-uHG) Trial samples using the EBC method 9.41, and results are reported in Table 1 below.

**Table 1, Physical Stability of Control and Trial Beers (*normalized by dividing by ABV of the Control)**

| | **Beer 1** | | | **Beer 2** | | |
|---|---|---|---|---|---|---|
| | **Control** | **uHG Trial** | **C-uHG Trial** | **Control** | **uHG Trial** | **C-uHG Trial** |
| *Alcohol by volume** | 1 | 0.67 | 0.65 | 1 | 0.67 | 0.64 |
| *Permanent Haze [NTU]* | 1.4 | 7.4 | 1.1 | 1.5 | 4.7 | 0.49 |
| *Chill Haze [NTU]* | 158.6 | 16.5 | 0.4 | 127.5 | 2.9 | 1.6 |
| *Total Haze [NTU]* | 160 | 23.9 | 1.4 | 129 | 7.6 | 2.0 |

Beer 1 in Table 1 was then aged at 55°C for five days and haze was measured using EBC method 9.41. Total haze remains lowest in the clarified uHG trial sample after aging, illustrating improved physical stability via the UltraChill method. The decrease in chill haze of the samples after aging may be due to a higher measurement temperature of the aged samples, measured after the samples were cooled from 55°C. The decrease may also result from the solubilizing of compounds at the higher temperature. Results are reported in Table 2.

**Table 2, Physical Stability of Control and Trial Beers (*normalized by dividing by ABV of the Control)**

| | **Before aging** | | | **After Aging** | | |
|---|---|---|---|---|---|---|
| | **Control** | **uHG Trial** | **C-uHG Trial** | **Control** | **uHG Trial** | **C-uHG Trial** |
| *Alcohol by volume** | 1 | 0.67 | 0.65 | 1 | 0.67 | 0.65 |
| *Permanent Haze [NTU]* | 1.4 | 7.4 | 1.1 | 1.1 | 2.9 | 0.92 |
| *Chill Haze [NTU]* | 158.6 | 16.5 | 0.4 | 212.9 | 82.9 | 12.5 |
| *Total Haze [NTU]* | 160 | 23.9 | 1.4 | 214 | 85.8 | 13.4 |

The embodiments of the invention described above are within the scope of the present invention as defined in the appended claims.

## Claims

1. A method of producing a physically stable alcoholic beverage having a turbidity of less than 2 EBC units, the alcoholic beverage being beer and having been obtained via filtration and separation processes, the method comprising:
receiving retentate from which water has been removed by reverse osmosis from a reverse osmosis filter system having an initial alcoholic precursor to the alcoholic beverage in a feed stream, wherein a concentration of alcohol in the retentate has reached between 10% and 40% by volume by the reverse osmosis;
cooling the retentate to a temperature between about 2 degrees below a freezing point of the retentate and a freezing point of the initial alcoholic precursor to the alcoholic beverage in the feed stream to produce a cooled retentate; and
subjecting the cooled retentate to a clarification process configured to remove particles having a size of 0.4 microns and larger to produce a clarified retentate, the clarification process including (a) centrifuging, (b) filtration using a filter, and/or (c) forming a supernate and a precipitate and then decanting the supernate.

2. A method according to claim 1, further comprising:
debrewing the clarified retentate after subjecting the retentate to the clarification process.

3. A method according to claim 1 or 2, wherein
the cooling includes cooling the retentate between about 2 degrees below the freezing point of the retentate to about -2.5° C.

4. A method according to any one of claims 1 to 3, wherein the cooling includes cooling the retentate for up to one week before the clarification process.

5. A method according to any one of claims 1 to 4, further comprising adding a fining agent to the retentate before the clarification process.

6. A method according to any one of claims 1 to 5, further comprising:
filtering the alcoholic beverage in the reverse osmosis filter system, wherein at least one membrane in the reverse osmosis filter system is substantially impermeable to ethanol but substantially permeable to water.

7. A method according to any one of claims 1 to 6, further comprising operating at least one membrane of the reverse osmosis filter system at a pressure of at least 10342 kPa (1500 psi).

8. A method according to any one of claims 1 to 6, further comprising operating the reverse osmosis filtration system to utilize at least a portion of a pressure of the retentate to drive the clarification process of the retentate.

9. A method according to any one of claims 1-8, wherein the filter is selected from the group consisting of diatomaceous earth filter, a polymeric membrane filter, a ceramic filter, and combinations thereof.

## Patentansprüche

1. Verfahren zum Erzeugen eines physikalisch stabilen alkoholischen Getränks, das eine Trübheit von weniger als 2 EBC-Einheiten aufweist, wobei das alkoholische Getränk Bier ist und über Filtrations- und Abscheidungsprozesse gewonnen worden ist, wobei das Verfahren Folgendes umfasst:
Empfangen eines Retentats, aus dem durch Umkehrosmose Wasser entfernt worden ist, von einem Umkehrosmose-Filtersystem, das einen anfänglichen alkoholischen Vorläufer zu dem alkoholischen Getränk in einem Speisestrom aufweist, wobei eine Konzentration von Alkohol in dem Retentat durch die Umkehrosmose zwischen 10 und 40 Volumen-% erreicht hat,
Kühlen des Retentats auf eine Temperatur zwischen etwa 2 Grad unterhalb eines Gefrierpunkts des Retentats und eines Gefrierpunkts des anfänglichen alkoholischen Vorläufers zu dem alkoholischen Getränk in dem Speisestrom, um ein gekühltes Retentat zu erzeugen, und
Unterwerfen des gekühlten Retentats einem Klärungsprozess, der dafür konfiguriert ist, Teilchen, die eine Größe von 0,4 Mikrometer und größer aufweisen, zu entfernen, um ein geklärtes Retentat zu erzeugen, wobei der Klärungsprozess (a) Zentrifugieren, (b) Filtration unter Verwendung eines Filters und/oder (c) Bilden eines Überstands und eines Niederschlags und danach Dekantieren des Überstands einschließt.

2. Verfahren nach Anspruch 1, das ferner Folgendes umfasst:
Verdünnen des geklärten Retentats nach dem Unterwerfen des Retentats dem Klärungsprozess.

3. Verfahren nach Anspruch 1 oder 2, wobei
das Kühlen das Kühlen des Retentats zwischen etwa 2 Grad unterhalb des Gefrierpunkts des Retentats bis etwa -2,5 °C einschließt.

4. Verfahren nach einem der Ansprüche 1 bis 3, wobei das Kühlen das Kühlen des Retentats für bis zu einer Woche vor dem Klärungsprozess einschließt.

5. Verfahren nach einem der Ansprüche 1 bis 4, das ferner das Hinzugeben eines Schönungsmittels zu dem Retentat vor dem Klärungsprozess umfasst.

6. Verfahren nach einem der Ansprüche 1 bis 5, das ferner Folgendes umfasst:
Filtern des alkoholischen Getränks in dem Umkehrosmose-Filtersystem, wobei mindestens eine Membran in dem Umkehrosmose-Filtersystem im Wesentlichen undurchlässig für Ethanol, aber im Wesentlichen durchlässig für Wasser, ist.

7. Verfahren nach einem der Ansprüche 1 bis 6, das ferner das Betreiben mindestens einer Membran des Umkehrosmose-Filtersystems bei einem Druck von mindestens 10342 kPa (1500 psi) umfasst.

8. Verfahren nach einem der Ansprüche 1 bis 6, das ferner das Betreiben des Umkehrosmose-Filtersystems umfasst, um mindestens einen Teil eines Drucks des Retentats zu benutzen, um den Klärungsprozess des Retentats voranzutreiben.

9. Verfahren nach einem der Ansprüche 1 bis 8, wobei der Filter aus der Gruppe ausgewählt ist, die aus einem Kieselgurfilter, einem Polymermembranfilter, einem Keramikfilter und Kombinationen derselben besteht.

## Revendications

1. Procédé de production d'une boisson alcoolisée physiquement stable présentant une turbidité inférieure à 2 unités EBC, la boisson alcoolisée étant de la bière et ayant été obtenue via des processus de filtration et de séparation, le procédé comprenant :
la réception d'un rétentat à partir duquel de l'eau a été retirée par osmose inverse à partir d'un système de filtration à osmose inverse présentant un précurseur alcoolisé initial de la boisson alcoolisée dans un courant d'alimentation, dans lequel une concentration en alcool dans le rétentat a atteint entre 10 % et 40 % en volume par l'osmose inverse ;
le refroidissement du rétentat jusqu'à une température entre environ 2 degrés en dessous d'un point de congélation du rétentat et un point de congélation du précurseur alcoolisé initial de la boisson alcoolisée dans le courant d'alimentation pour produire un rétentat refroidi ; et
la soumission du rétentat refroidi à un processus de clarification configuré pour éliminer des particules présentant une taille de 0,4 micron et plus pour produire un rétentat clarifié, le processus de clarification incluant (a) la centrifugation, (b) la filtration à l'aide d'un filtre et/ou (c) la formation d'un surnageant et d'un précipité et ensuite la décantation du surnageant.

2. Procédé selon la revendication 1, comprenant en outre :
la dilution du rétentat clarifié après la soumission du rétentat au processus de clarification.

3. Procédé selon la revendication 1 ou 2, dans lequel
le refroidissement inclut le refroidissement du rétentat entre environ 2 degrés en dessous du point de congélation du rétentat et environ -2,5 °C.

4. Procédé selon l'une quelconque des revendications 1 à 3, dans lequel le refroidissement inclut le refroidissement du rétentat jusqu'à une semaine avant le processus de clarification.

5. Procédé selon l'une quelconque des revendications 1 à 4, comprenant en outre l'ajout d'un agent affineur au rétentat avant le processus de clarification.

6. Procédé selon l'une quelconque des revendications 1 à 5, comprenant en outre :
la filtration de la boisson alcoolisée dans le système de filtration par osmose inverse, dans lequel au moins une membrane dans le système de filtration à osmose inverse est sensiblement imperméable à l'éthanol mais sensiblement perméable à l'eau.

7. Procédé selon l'une quelconque des revendications 1 à 6, comprenant en outre l'exploitation d'au moins une membrane du système de filtration à osmose inverse à une pression d'au moins 10342 kPa (1500 psi).

8. Procédé selon l'une quelconque des revendications 1 à 6, comprenant en outre le fonctionnement du système de filtration à osmose inverse pour utiliser au moins une partie d'une pression du rétentat pour piloter le processus de clarification du rétentat.

9. Procédé selon l'une quelconque des revendications 1 à 8, dans lequel le filtre est sélectionné dans le groupe constitué d'un filtre à terres de diatomée, d'un filtre à membrane polymère, d'un filtre céramique et de combinaisons de ceux-ci.
